# EUROPEAN PATENT APPLICATION

(11) **EP 4 653 379 A1**
(43) Date of publication of application: **26.11.2025**
(21) Application number: 25177239.8
(22) Date of filing: 19.05.2025
(51) Int. Cl.: B66F 9/075

(54) **INDUSTRIAL TRUCK PROVIDED WITH A STRUCTURE FOR THE DISPLAYING OF OPERATIONAL INFORMATION RELATING TO THE ELECTRICITY STORAGE SYSTEM**

(30) Priority: 20.05.2024 IT 202400011323
(71) Applicant: Toyota Material Handling Manufacturing Italy S.p.A, 40132 Bologna (IT)
(72) Inventor: NARDELLA, Andrea Federico, 40033 Casalecchio di Reno (BO) (IT)
(74) Representative: Hoffmann Eitle

(57) **Abstract**

An electrically powered industrial truck (10) comprises an outer structure (11) and an inner compartment (12) intended for accommodating an electricity storage system (14) for the industrial truck powering, where a display (16) is associated to the electricity storage system (14) and is configured to display operational information of the electricity storage system. The outer structure (11) is configured so that, when the industrial truck is in an operational condition, the operational information displayed by the display (16) is visible from outside the industrial truck.

## Description

### Field of the invention

The present invention relates to an industrial truck and, more generally, to an electrically powered industrial truck provided with a structure for the displaying of operational information of the electricity storage system.

### Technical background

It is known in the art to make industrial trucks provided with material handling means, such as a forklift, which can be used for example in an industrial site, a warehouse, a port or the like. The forklift can be coupled to different material handling devices, such as a fork, a gripper, a rod for material in reels or other.

In recent years, industrial trucks have become increasingly widespread, powered electrically by a battery. The battery may be configured to power the locomotion function and/or the material handling function by the industrial truck. In some cases, the battery is positioned in an industrial truck compartment that is openable/closable via a battery-holder compartment door, for example positioned on a lateral side of the truck.

In the field of industrial trucks, batteries are also known that include a display on which the battery charge level is displayed.

However, in known industrial trucks, it is not possible to control the battery charge level quickly and easily when the industrial truck is switched off. In particular, it is not possible to control the battery charge level quickly and easily when the industrial truck is switched off, the battery compartment door is closed and the battery itself is not connected to a charger. This can lead to drawbacks, for example when an operator has to select an industrial truck to be used for a certain task in a relatively large fleet of forklifts, or when it comes to monitoring the charge level of a fleet of industrial trucks.

### Summary of the invention

In light of the above-noted problems, an object of the present disclosure is to provide an industrial truck that can solve the above-described problems.

Therefore, the present disclosure proposes an electrically powered industrial truck comprising an outer structure and an inner compartment intended for accommodating an electricity storage system for the industrial truck powering, wherein a display is associated to the electricity storage system and is configured to display operational information related to the electricity storage system, characterized in that the outer structure is configured so that, when the industrial truck is in an operational condition, the operational information displayed by the display is visible from outside the industrial truck.

Preferably, the display is configured to display the operational information of the electricity storage system when the industrial truck is off.

Preferably, the inner compartment is arranged below a driver's station between a front axle and a rear axle of the industrial truck.

Preferably, the display is positioned in correspondence of a lateral side of the industrial truck, when the energy storage system is positioned in the inner compartment.

Preferably, when the industrial truck is in the operational condition, the outer structure includes a transparent portion positioned in correspondence of the display in order to allow the view of the display from outside the industrial truck through the transparent portion.

Preferably, the transparent portion has dimensions essentially corresponding to those of the display.

Preferably, the outer structure includes a closing door of the compartment that is movable between an opening position where the compartment is accessible from outside and a closing position corresponding to the operational condition of the industrial truck in which the compartment is essentially closed.

Preferably, the closing door of the compartment comprises a body equipped with an opening, said transparent portion being mounted on the door in order to close the opening, preferably in a waterproof manner.

Preferably, the operational information includes an indication of the electricity storage system temperature and/or an indication of the electricity storage system charge level.

Preferably, the industrial truck further comprises:
- a proximity detector intended for detecting the presence of a user next to the display; and
- control means configured for switching on the display when the proximity detector detects a user next to the display, and switching off the display when the proximity detector doesn't detect any users next to the display.

Preferably, the display and/or the proximity detector are mounted on the electricity storage system.

Preferably, the outer structure includes an opening having dimensions corresponding to those of the display, said opening being positioned in correspondence of the display in order to allow the view in the display from outside the truck and to cover areas adjacent to the display.

Thanks to the present disclosure, it is possible to easily and efficiently check the status of the energy storage system of the industrial truck. It is made possible for a user to read battery-related information from outside the industrial truck. In one embodiment, it is possible for a user to read the battery status without having to open the battery compartment door and/or without connecting the battery to a charger. This allows to quickly monitor the status of the batteries even in a large fleet of industrial trucks. In addition, in one embodiment, different battery status information can be monitored, quickly and easily providing a complete picture to the operators about the battery status. In addition, the present disclosure allows battery operational data to be monitored with reduced power consumption.

### Brief description of the drawings

The present disclosure will be illustrated with reference to exemplary embodiments described with reference to the accompanying drawings.

In the drawings:
- figure 1 illustrates an industrial truck with a battery-holder compartment door in the open position and the battery removed;
- figure 2 illustrates the industrial truck of figure 1 with the battery inserted in the battery-holder compartment;
- figure 3 illustrates a display associated to the electricity storage system;
- figure 4 illustrates an exploded view of a part of the battery-holder compartment closing door;
- figure 5 illustrates a schematic view of the control means of the display configured to display information related to the energy storage system;
- figure 6 illustrates an alternative embodiment of an industrial truck according to the present disclosure.

### Detailed description

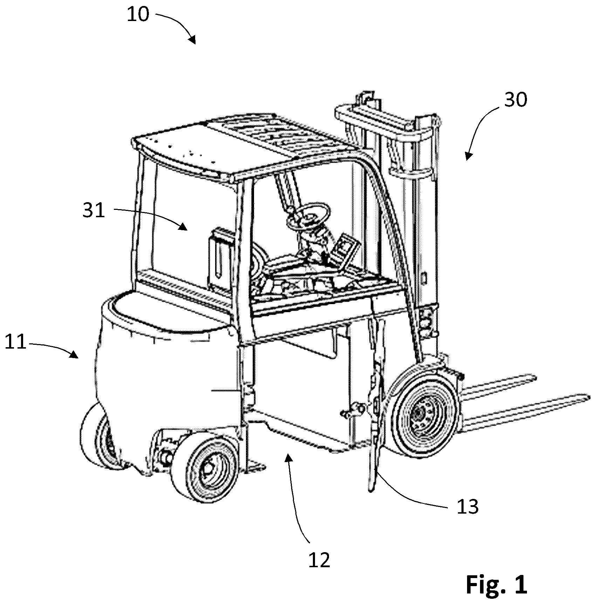

Referring to figure 1, an electrically powered industrial truck 10, for example a forklift truck, is shown. The industrial truck 10 can include material handling means 30; the material handling means can for example include a mast along which a material gripping device, such as a fork, a gripper, or other known devices, can slide in a substantially vertical direction; in the example of figure 1, the material gripping device corresponds to a pair of forks. For example, the industrial truck 10 can be used in industrial sites, warehouses, ports, airports, logistic hubs or the like. The electrically powered industrial truck can be of the hybrid type (i.e. provided with a traction or locomotion system that includes at least one electric motor and at least one combustion engine), or it could be completely electric (therefore with a traction system that does not include a combustion engine and instead includes only one or more electric motors). For example, the industrial truck may be counterbalanced, in particular a counterbalanced forklift truck. The industrial truck 10 may advantageously comprise a station 31 for the driver of the truck itself; for example, the station 31 may include a seat; the station 31 may comprise an open or closed cabin within which the seat for the operator may preferably be located and an interface for guiding the truck. Preferably, the industrial truck 10 comprises a front axle and a rear axle, for example with two wheels for each axle. However, other configurations are also possible, for example with three wheels.

The industrial truck 10 comprises an outer structure 11 and an inner compartment 12 intended for accommodating an electricity storage system 14 for the industrial truck powering. The outer structure 11 can be formed by a load-bearing frame of the industrial truck, or by an outer body of the industrial truck or even by a combination of these.

The outer structure 11 may also include one or more hatches or doors; in the example in figure 1, the outer structure 11 includes a door 13 for closing the inner compartment 12.

The inner compartment 12, or battery-holder compartment or even simply compartment in the following, is advantageously formed, at least in part, in the load-bearing frame of the industrial truck. Preferably, the battery-holder compartment is located below the truck's driver station 31. Preferably, the battery-holder compartment 12 extends between a front axle and a rear axle of the industrial truck 10. Preferably, the battery-holder compartment 12 extends in a longitudinal direction with respect to the industrial truck so as to occupy at least 50% of the gap between a front wheel and a rear wheel of the industrial truck, more preferably at least 70% of the gap between a front wheel and a rear wheel of the industrial truck. Thereby, the battery-holder compartment 12 and the electricity storage system 14 can occupy a sufficient volume to guarantee a desired autonomy of the industrial truck in terms of residual energy. As well shown in figure 1, in a preferred embodiment, the battery-holder compartment 12 comprises a lateral opening for removing/introducing the electric battery from/into the battery-holder compartment. The opening extends longitudinally over substantially the entire extension of the battery-holder compartment 12. Preferably, the compartment 12 is open at the lower part to allow the removal/introduction of the electric battery from/into the compartment using transportation means that supports the electric battery at the lower part, for example a pallet truck or another forklift truck; however, another configuration of the compartment 12 could also be used in which the compartment is not open at the lower part and the battery is removed/introduced with another system, for example by means of a roller system.

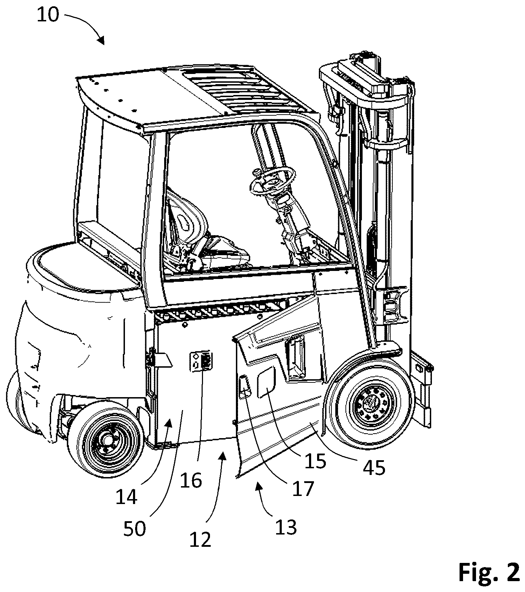

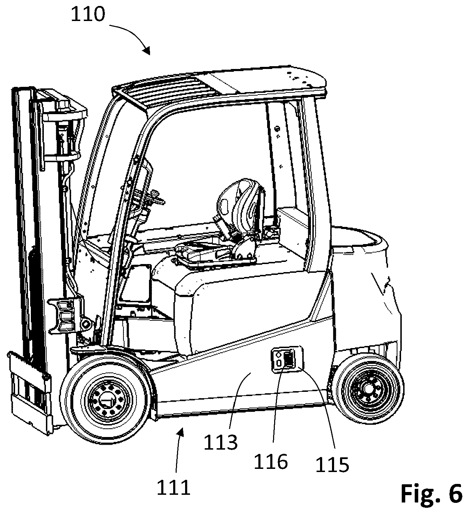

The electricity storage system 14 (shown in figure 2) includes an electric battery. By "electric battery" is meant here any battery system, such as for example a lithium battery, lead acid battery, or other types of battery, or a combination of a plurality of battery modules or packs of any type according to the known art. The electricity storage system 14 is configured to supply power to the main functions of the industrial truck, for example the drive function and/or the material handling function. For example, the electricity storage system 14 may be configured to supply electrical power to one or more electric motors that constitute a traction system of the truck; in another example, the electricity storage system 14 may supply electric power to one or more actuators designed to handle a load, for example for lifting by means of a fork. In one embodiment, the electricity storage system 14 includes an outer casing 50 (shown in figure 2) within which the electric battery, i.e., one or more electric battery modules, is positioned. The outer casing 50 can be made in a box-like shape, for example in the shape of a parallelepiped. The outer casing 50 may be made of sheet metal. The outer casing 50 may for example be of the waterproof sealed type. The electricity storage system 14 can be of the type removable from the compartment 12 (as in the case depicted in fig. 1 and fig. 2), but could also be of the non-removable type, i.e. of the integrated type (see the embodiment of figure 6, discussed in more detail below).

The industrial truck 10 further comprises a door 13 movable between a closing position and an opening position of the compartment 12. Preferably, the door 13 in the closing position at least partly closes the lateral opening of the compartment 12; preferably in the closing position the door 13 completely closes the lateral opening. Preferably, in the opening position the door 13 does not interfere with the electric battery 14 passing through the lateral opening of the battery-holder compartment 12. The door 13 is mounted on the frame of the industrial truck in a movable manner between the closing position and the opening position, for example by means of a substantially vertical axis hinge; however, the door 13 could also be slidable between the opening and the closing position. The door 13 may include an opening handle 17 on a side opposite to that hinged to the frame of the industrial truck.

A display 16 is associated to the electricity storage system 14 and is configured to display operational information of the electricity storage system (see figure 2). Preferably, the display 16 is mounted on the electricity storage system 14, for example on the outer casing 50 of the electricity storage system 14. In one embodiment, the outer casing 50 could include a cavity intended for receiving the display 16. The display 16 may be fixed on the outer casing 50, although in an alternative embodiment it could be mounted on the inside of the door 13. The display 16 may preferably be fixed to a lateral wall of the electricity storage system 14. Preferably, when the electricity storage system 14 is positioned in the operating position in the compartment 12, the display 16 is positioned in correspondence of a lateral side of the industrial truck 10.

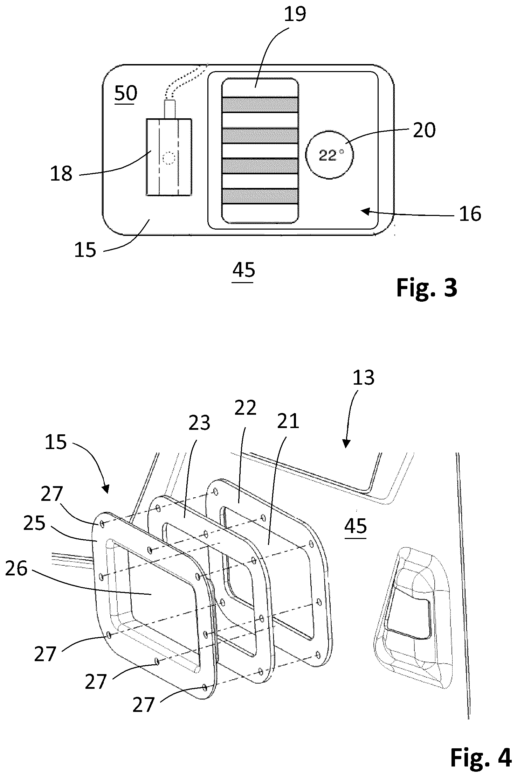

The operational information related to the electricity storage system 14 includes an indication of the temperature of the electricity storage system 14 and/or an indication of the electricity storage system charge level 14. In a preferred embodiment, both the energy level 19 and the temperature 20 are displayed by the display 16, as depicted in figure 3. Other information may also be displayed in addition to or as an alternative to that described. However, the charge level 10 and the temperature in combination provide a set of information useful for evaluating the current state of the electricity storage system 14 for the purpose of, for example, selecting or not the industrial truck to perform a certain task.

The outer structure 11 of the industrial truck 10 is configured so that, when the industrial truck is in an operational condition, the operational information displayed by the display 16 is visible from outside the industrial truck. In one aspect, "in an operational condition" means that the industrial truck is ready to start performing an operating function (possibly following ignition) or is performing an operating function, such as locomotion and/or material handling. In one example, "in an operational condition" means with the compartment door closed and with the energy storage system 14 positioned in the battery-holder compartment 12, regardless of whether the industrial truck is on or off. For example, an industrial truck parked and switched off after performing a task is in an operational condition. In one example, "in an operational condition" means with the battery-holder compartment door closed, with the energy storage system 14 positioned in the battery-holder compartment 12, and with the energy storage system 14 that is not connected to a charger. In one example, "in an operational condition" means that the industrial truck is off and that by only switching on (therefore without the need for further operations, such as for example closing the door and/or disconnecting the battery charging cable) the industrial truck can perform an operational function, such as for example locomotion and/or material handling.

The display 16 is configured to display the operational information of the electric energy storage system when the industrial truck is off. The display 16 is configured to display the operational information of the electric energy storage system both when the industrial truck is off and when the industrial truck is on. For example, the display 16 may be powered directly from the energy storage system 14; alternatively, the display 16 could be electrically powered from a separate battery, e.g., a replaceable battery.

The outer structure 11 is configured so as to enclose the energy storage system 14 therein, for example to protect it from external agents (such as for example atmospheric agents, impacts, external bodies or the like).

When the industrial truck is in the operational condition, the outer structure 11 includes a transparent portion 15 positioned in correspondence of the display 16 so as to allow the view of the display from outside the industrial truck. The transparent portion 15 has dimensions substantially corresponding to those of the display, or slightly larger. For example, the transparent portion could be made of glass or a transparent plastic material. In a preferred embodiment, the outer structure 11 includes the closing door 13 of the compartment 12 that is movable between the opening position in which the compartment 12 is accessible from outside and the closing position corresponding to the operational condition of the industrial truck in which the compartment 12 is essentially closed. Preferably, the closing door 13 of the compartment 12 comprises a body 45 equipped with an opening 21, said transparent portion 15 being mounted on the door 13 in order to close the opening 21, preferably in a waterproof manner. In other words, the door 13 includes the transparent portion 15. The display 16 and the transparent portion 15 are positioned respectively on the energy storage system 14 and on the door 13 so that, when the door is in the closing position and the energy storage system 14 is in the compartment 12 (and therefore the industrial truck is in the operational condition), the display 16 is positioned in correspondence of the transparent portion 15 in order to allow the view of the information displayed by the display from outside the industrial truck through the transparent portion.

With reference to what is shown in the view of figure 4, the door 13 includes a body 45, for example made of sheet metal. The opening 21 is formed in the body 45. The opening can have a substantially rectangular shape, although other shapes could also be conceived. The opening 21 is advantageously surrounded by a frame 22 welded on the body 45. The frame 22 can be made with a metal plate welded on the inside of the door 13, i.e. on the side facing the compartment 12 when the door 13 is in the closing position. The frame 22 includes holes intended to receive fixing means (for example screws) for fixing the transparent portion 15. The transparent portion 15 may be made of glass. The transparent portion 15 may advantageously include a central portion 26 intended to be positioned in the opening 21 in the body 45, and a frame portion 25 which surrounds the central portion 26 and is intended to be fixed to the frame 22 welded on the body 45. The frame portion 25 includes holes 27 corresponding to those formed on the frame 22 for receiving fixing means. Advantageously, a gasket 23 is positioned between the transparent portion and the body 45, preferably between the frame portion 25 and the frame 22. The gasket makes the door 13 and transparent portion 15 assembly waterproof. The gasket 23 includes holes corresponding to the holes 27 intended to receive means for fixing the transparent portion 15 to the door 13.

In one embodiment, the industrial truck 10 further comprises:
- a proximity detector 18 intended for detecting the presence of a user next to the display 16; and
- control means 40 configured for switching on the display 16 when the proximity detector detects a user next to the display 16, and switching off the display when the proximity detector doesn't detect any user next to the display 16.

In this way, the power consumption for powering the display 16 can be reduced.

The proximity detector 18 is preferably mounted on the electricity storage system 14. The proximity detector 18 may be arranged adjacent to the display 16, as shown in figure 3. The proximity detector 18 may be made according to any known technique. Preferably, the proximity detector is positioned in correspondence of the transparent portion 15. In particular, the transparent portion 15 may have a dimension such as to substantially correspond to the dimensions of the assembly of the display 16 and the proximity detector 18, as shown in figure 3. This allows to use proximity sensors 18 suitable for detecting the proximity through a non-metallic transparent material, such as glass for example, forming the transparent portion. In this way, for example, it is possible to use an optical-type detector, for example an infrared detector.

In an alternative embodiment, the outer structure 11 includes an opening 21 having dimensions corresponding to those of the display 16, said opening 21 being positioned in correspondence of the display 16 to allow the view in the display from outside the truck and to cover areas adjacent to the display 16, for example in the event that a proximity detector 18 is not provided.

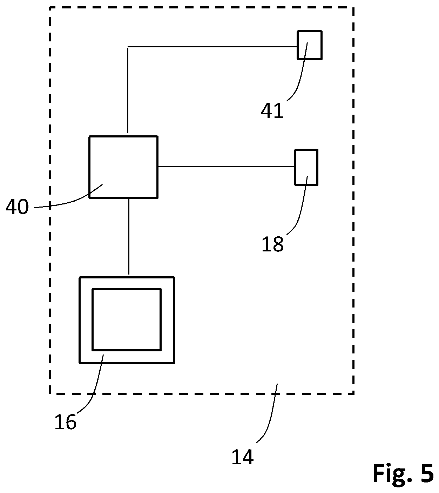

Preferably, the industrial truck 10 includes a temperature detector of the battery or, more generally, of the energy storage system 14. The temperature detector is shown schematically with reference 41 in the view in figure 5, where the control means 40 controlling the display 16 is shown. The temperature detector 41 and the proximity detector 18 are connected with the control means 40. The control means 40 may be realized with an independent control device mounted on the energy storage system. The control means 40 acquires the temperature measurement from the temperature detector 41 and employs the measurement to control the data displayed by the display 16. The temperature detector 41 may be mounted within the outer casing 50 of the energy storage system. The control means 40 may be associated to the energy storage system controller to acquire a data on the charge level and control the display 16 accordingly. Advantageously, the control means 40 are connected to the proximity detector and to the temperature detector, for example by means of a wiring harness. In one embodiment, the control means 40 could receive power by the electricity storage system 14, or could be powered by a separate replaceable battery.

In an alternative embodiment shown in figure 6, the industrial truck 110 differs from that described above in that the battery-holder compartment does not include an opening for removing the energy storage system and not even a door for opening/closing the compartment. In this case, the battery-holder compartment is closed by a flank 113 of the outer structure 111 of the industrial truck, which may for example include a load-bearing frame of the industrial truck. The flank 113 of the frame includes a transparent portion 115 positioned in correspondence of a display 116 associated to the energy storage system. The display 116 may be mounted on the energy storage system in a manner analogous to that described above and be configured to display the same data as described above. The transparent portion 115 can be made with a glass window in a manner similar to that described above for the embodiment of figures 1-5, with the difference that said transparent portion is formed on the frame 113 (or on a body portion) and not on a door 13.

The present disclosure also relates to a system including an industrial truck and an energy storage system configured to be received in the battery-holder compartment. The present disclosure also relates to an industrial truck provided without a battery.

## Claims

1. An electrically powered industrial truck (10) including an outer structure (11) and an inner compartment (12) intended for accommodating an electricity storage system (14) for the industrial truck powering, wherein a display (16) is associated to the electricity storage system (14) and is configured to display operational information related to the electricity storage system, **characterized in that** the outer structure (11) is configured so that, when the industrial truck is in an operational condition, the operational information displayed by the display (16) is visible from outside the industrial truck.

2. An industrial truck (10) according to claim 1, wherein the display (16) is configured to display the operational information of the electricity storage system when the industrial truck is off.

3. An industrial truck (10) according to claims 1 or 2, wherein the display (16) is positioned in correspondence of a lateral side of the industrial truck.

4. An industrial truck (10) according to claims 1, 2 or 3, wherein, when the industrial truck is in the operational condition, the outer structure (11) includes a transparent portion (15) positioned in correspondence of the display (16) in order to allow the view of the display from outside the industrial truck through the transparent portion (15).

5. An industrial truck (10) according to claim 4, wherein the transparent portion (15) has dimensions essentially corresponding to those of the display.

6. An industrial truck (10) according to one of the previous claims, wherein the outer structure (11) includes a movable closing door (13) of the compartment (12) that is movable between an opening position where the compartment (12) is accessible from outside and a closing position corresponding to the operational condition of the industrial truck in which the compartment (12) is essentially closed.

7. An industrial truck (10) according to claims 4 and 6, wherein the closing door (13) of the compartment (12) includes a body (45) equipped with an opening (21), said transparent portion (15) being mounted on the door (13) in order to close the opening (21).

8. An industrial truck (10) according to claim 7, wherein said transparent portion (15) is mounted on the door (13) in order to close the opening (21) in a waterproof manner.

9. An industrial truck (10) according to one or more of the previous claims, wherein the operational information includes an indication of the electricity storage system temperature (14).

10. An industrial truck (10) according to one or more of the previous claims, wherein the operational information includes an indication of the electricity storage system charge level (14).

11. An industrial truck (10) according to one or more of the previous claims, also including:
- a proximity detector (18) intended for detecting the presence of a user next to the display (16); and
- control means (40) configured for switching on the display (16) when the proximity detector detects a user next to the display (16) and switching off the display when the proximity detector doesn't detect any users next to the display (16).

12. An industrial truck (10) according to one or more of the previous claims, wherein the display (16) is mounted on the electricity storage system (14).

13. An industrial truck (10) according to claim 11, wherein the proximity detector is mounted on the electricity storage system (14).

14. An industrial truck (10) according to one or more of the previous claims, wherein the outer structure (11) includes an opening having dimensions corresponding to those of the display, said opening being positioned in correspondence of the display (16) in the operational condition of the industrial truck, in order to allow the view of the display and not allow the view of display contiguous areas (16) from outside the industrial truck.
